# EUROPÄISCHE PATENTANMELDUNG

(11) **EP 3 369 519 A2**
(43) Veröffentlichungstag der Anmeldung: **05.09.2018**
(21) Anmeldenummer: 18152147.7
(22) Anmeldetag: 17.01.2018
(51) Int. Cl.: B23K 26/70, E04H 15/50, E04B 2/74

(54) **LASERSCHUTZVORRICHTUNG ZUR ABSCHIRMUNG MINDESTENS EINER LASERLICHTQUELLE MIT FLÄCHIG AUSGEBILDETEN, FLEXIBLEN WANDELEMENTEN**

(30) Priorität: 17.01.2017 DE 202017100227 U; 23.06.2017 DE 102017113995
(71) Anmelder: JUTEC Hitzeschutz und Isoliertechnik GmbH, 26180 Rastede (DE)
(72) Erfinder: Jung, Stefan, 26125 Oldenburg (DE); Brüning, Heiko, 26919 Brake (DE); Krippl, Hermann, 94522 Wallersdorf (DE)
(74) Vertreter: Jabbusch, Matthias

(57) **Zusammenfassung**

Bei einer Laserschutzvorrichtung zur Abschirmung mindestens einer Laserlichtquelle mit flächig ausgebildeten, flexiblen Wandelementen (12), die mindestens vier Seitenwände ausbilden, wobei die Wandelemente (12) zumindest abschnittsweise aus laserlichtundurchlässigem Material bestehen und mit mindestens einem mindestens ein Wandelement (12) haltenden Gestell (1), ist erfindungswesentlich vorgesehen, dass die Wandelemente (12) einen abzuschirmenden Raum in vier seitliche Richtungen umgeben und dass das Gestell (1) verfahrbar ausgebildet ist.

## Beschreibung

Die Erfindung betrifft eine Laserschutzvorrichtung zur Abschirmung mindestens einer Laserlichtquelle mit flächig ausgebildeten, flexiblen Wandelementen, die mindestens vier Seitenwände ausbilden, wobei die Wandelemente zumindest abschnittsweise aus laserlichtundurchlässigem Material bestehen und mit mindestens einem mindestens ein Wandelement haltendem Gestell.

Laserschutzvorrichtungen der eingangs genannten Art sind bekannt und werden beispielsweise an Laserarbeitsplätzen, wie beispielsweise in der Automobilindustrie, der Schiffbauindustrie oder der Flugzeugindustrie eingesetzt. Von besonderer Wichtigkeit ist bei Laserarbeitsplätzen der Schutz des Bedienpersonals, sowie der Schutz von Personen, die sich außerhalb des Arbeitsplatzes befinden. Beispielsweise können Laserstrahlen an Gegenständen reflektiert werden und somit in alle möglichen Raumrichtungen diffus abgestrahlt werden. Durch diese Reflexionen, insbesondere durch Streustrahlung aufgrund von diffuser Reflektion, ist eine erhebliche Gefahr für die sich in der Nähe befindlichen Personen gegeben. Ein Schutz vor dieser reflektierten Laserstrahlung ist somit, insbesondere bei Arbeitsplätzen in größeren Hallen oder ähnlichen Räumlichkeiten, unbedingt erforderlich. Als Schutzvorrichtungen werden beispielsweise Einhausungen aus starren Wänden, die die Laserlicht erzeugende Quelle umgeben, eingesetzt. Diese Konstruktionen sind zumeist starr und sperrig ausgeführt, so dass ein flexibler Einsatz und eine individuelle Anpassung an den jeweiligen Einsatzort und die lokalen Gegebenheiten nicht möglich sind. Zudem ist ein Transport einer entsprechenden Laserschutzeinrichtung von einem Einsatzort zu einem anderen Einsatzort aufgrund des sperrigen Aufbaus schwierig und zumeist ohne die Hilfe von Geräten nicht zu bewerkstelligen bzw. kann ein Transport unmöglich sein, wenn die Laserschutzeinrichtung fest mit dem Hallenboden verbunden ist.

Der Erfindung liegt die Aufgabe zu Grunde, eine Laserschutzvorrichtung der eingangs genannten Art vorzuschlagen, mit der ein flexibler Einsatz und ein leichter Transport an den jeweiligen Einsatzort ermöglicht ist.

Die Lösung dieser Aufgabe erfolgt mit einer Laserschutzvorrichtung mit den Merkmalen des Schutzanspruchs 1. Vorteilhafte Ausgestaltungen und Weiterbildungen sind in den jeweiligen Unteransprüchen angegeben.

Bei einer Laserschutzvorrichtung zur Abschirmung mindestens einer Laserlichtquelle mit flächig ausgebildeten, flexiblen Wandelementen, die mindestens vier Seitenwände ausbilden, wobei die Wandelemente zumindest abschnittsweise aus laserlichtundurchlässigem Material bestehen und mit mindestens einem mindestens ein Wandelement haltenden Gestell, ist erfindungswesentlich vorgesehen, dass die Wandelemente einen abzuschirmenden Raum in vier seitliche Richtungen umgeben und dass das Gestell verfahrbar ausgebildet ist.

Zur Abschirmung einer Laserlichtquelle werden flexible Wandelemente eingesetzt, die beispielsweise aus einem textilen Material, einem Planenstoff, einem Kunststoff oder einem ähnlichen flexiblen Material bestehen, eingesetzt. Das Material oder die Materialien, aus denen die Wandelemente bestehen, ist hierbei laserlichtundurchlässig. Insbesondere weisen die Wandelemente eine Undurchlässigkeit für die Wellenlängenbereiche gebräuchlicher Laser auf. Die Wandelemente werden an einem Gestell befestigt, so dass durch die flexiblen Wandelemente Seitenwände ausgebildet werden. Das Gestell mit den Seitenwänden wird um die Laserlichtquelle, insbesondere um den kompletten Laserarbeitsplatz herum, angeordnet. Somit ist eine seitliche Abschirmung um die Laserlichtquelle gegeben, so dass kein Streulicht bzw. reflektiertes Licht zu den Seiten hin austreten kann. Die Seitenwände reichen hierbei soweit auf dem Boden, dass eine möglichst spaltfreie Abdeckung von der Seitenflächen zum Boden gegeben ist. Um eine möglichst leichte Transportierbarkeit der Laserschutzvorrichtung zu gewährleisten, ist das Gestell verfahrbar ausgebildet. Hierdurch lässt sich die Laserschutzvorrichtung leicht zu einem abzuschirmenden Bereich verschieben. Die flexiblen Wandelemente können einfach angehoben werden bzw. zur Seite geschoben werden, so dass die Aufnahme einer abzuschirmenden Laserquelle problemlos möglich ist. Des Weiteren ist die Laserschutzvorrichtung, insbesondere das Gestell in Einzelteile zerlegbar und die flexiblen Wandelemente sind zusammenlegbar. Somit ist ein einfacher Transport auch in kleinen Transporteinrichtungen ermöglicht. Auch eine Lagerung der Laserschutzvorrichtung ist somit flexibel möglich. Durch die Laserschutzvorrichtung sind insbesondere die Anforderungen der Laserschutzklassen 3 und 4 erfüllt.

In einer Weiterbildung der Erfindung weist die Laserschutzvorrichtung mindestens ein flächig ausgebildetes, flexibles Deckenelement auf und das Deckenelement und die Wandelemente umgeben einen abzuschirmenden Raum in vier seitliche Richtungen sowie nach oben. Um zu verhindern, dass Laserlicht nach oben reflektiert wird und beispielsweise durch mehrfache Reflexion eine Gefahr für umstehendes Personal darstellt, weist die Laserschutzvorrichtung ein Deckenelement auf, das ebenfalls aus dem laserlichtundurchlässigen Material der Seitenwände besteht. Durch die Anordnung von Seitenelementen und Deckenelement zueinander ist eine vollständige Abschirmung der Laserlichtquelle gegeben.

In einer Weiterbildung der Erfindung ist die Grundfläche des durch die Laserschutzvorrichtung abgeschirmten Raumes durch das Gestell anpassbar. Das Gestell kann so aufgebaut sein, dass eine Anpassung an die Grundfläche des abzuschirmenden Raumes gegeben ist. Somit kann die Laserschutzvorrichtung leicht an die Gegebenheiten des Verwendungsorts angepasst werden.

In einer Ausführungsform der Erfindung weist das Gestell mindestens vier Eckpfosten und mindestens vier die Eckpfosten verbindende Dachträgerteile auf und die Dachträgerteile sind faltbar ausgebildet. Das Gestell, das die Wandelemente und das Deckenelement hält, kann beispielsweise pavillonartig ausgebildet sein. Zur Aufnahme der Wandelemente weist das Gestell mindestens vier Eckpfosten, die vorzugsweise an den Ecken des abzuschirmenden Raumes positioniert sind, auf. Die Eckpfosten können dabei teleskopartig ausgeführt sein, so dass eine Längenanpassung an die jeweiligen räumlichen Gegebenheiten ermöglicht ist. Neben den Eckpfosten kann das Gestell auch Seitenpfosten aufweisen, die beispielsweise an den Längsseiten des Gestelles zwischen zwei Eckpfosten parallel zu diesen angeordnet sein können. Durch die Seitenpfosten kann eine zusätzliche Stabilität des Gestelles gegeben sein. Die Seitenpfosten können nachträglich, beispielsweise in einer dafür vorgesehenen Aufnahme, montierbar sein. Die Eckpfosten können durch Dachträgerteile, vorzugsweise an den dem Boden abgewandten Ende der Eckpfosten, miteinander verbunden sein. Zudem können zwischen den Eckpfosten bzw. zwischen den Eckpfosten und den Seitenpfosten Längsstreben angeordnet sein, die zwei benachbarte Eckpfosten bzw. benachbarte Eckpfosten und Seitenpfosten miteinander verbinden. Diese Längsstreben könne mittig, also auf halber Höhe, der Eckpfosten bzw. Seitenpfosten angeordnet sein und können nachträglich montierbar sein. Um eine Größenanpassung der Grundfläche des abzuschirmenden Raumes durch das Gestell zu ermöglichen, können die Dachträgerteile faltbar ausgebildet sein. Beispielsweise können die Dachträgerteile hierbei scherengitterartig ausgebildet sein, so dass ein einfaches Auseinanderziehen der Dachträgerteile auf die gewünschte Länge bzw. Breite ermöglicht ist. Die Dachträgerteile können hierbei aus einzelnen Dachstreben bestehen, die gekreuzt an einem Schnittpunkt miteinander verbunden sind. Die Verbindung der Dachstreben zu den Eckpfosten kann über auf den Eckpfosten gleitend gelagerte Gleitelemente gegeben sein, um ein Zusammenfalten der Dachträgerteile zu ermöglichen. Somit sind die Eckpfosten und die Dachträgerteile so beweglich miteinander verbunden, dass zum Aufbau lediglich ein Ausziehen der Eckpfosten auf die gewünschte Höhe und ein Auseinanderziehen der Dachträgerteile auf die gewünschte Länge bzw. Breite erforderlich ist. Eine einfache Lagerung sowie ein einfacher Transport der Laserschutzvorrichtung im zusammengefalteten Zustand ist hierdurch gegeben. Weiterhin können die Dachträgerteile auch starr und von den Eckpfosten und Seitenpfosten trennbar ausgebildet sein.

In einer Weiterbildung der Erfindung sind an den, dem Boden zugeordneten Enden der Eckpfosten Rollen angeordnet. Durch die Anordnung von Rollen an den Enden der Eckpfosten des Gestelles, die dem Boden zugewandt sind, ist eine leichte Verfahrbarkeit der Laserschutzvorrichtung bzw. des Gestelles gegeben. Somit kann die Laserschutzvorrichtung einfach von einem Einsatzort zum anderen geschoben werden. Eine flexible Einsetzbarkeit der Laserschutzvorrichtung ist somit gewährleistet.

In einer Weiterbildung der Erfindung sind die Wandelemente planenartig ausgebildet und Wandelemente sind an den Eckpfosten und den Dachträgerteilen befestigt. Die Wandelemente können beispielsweise planenartig ausgebildet sein, so dass sie sich leicht an den Eckpfosten und den Dachträgerteilen befestigen lassen. Nach dem Aufstellen des Gestelles werden beispielsweise die einzelnen Wandelemente über die von den Eckpfosten bzw. Seitenpfosten und den Dachträgerteilen aufgespannten Flächen gespannt, so dass die aufgespannte Fläche komplett abgeschirmt ist. In einer Weiterbildung der Erfindung sind die von den Eckpfosten und den Dachträgerteilen aufgespannten seitlichen Ebenen mit jeweils mindestens einem Wandelement abgedeckt und die obere, von den Dachträgerteilen aufgespannte Ebene ist mindestens von einem Deckenelement abgespannt. Durch die Abspannung der von den Eckpfosten bzw. den Seitenpfosten und den Dachträgerteilen aufgespannten Ebene, also der aufgespannten Fläche, ist eine vollständige Umschließung des abzuschirmenden Raumes gegeben. Auch Reflexionen, die nach oben hin abgelenkt werden, können durch das Deckenelement nicht nach außerhalb gelangen. Die Dachträgerteile können des Weiteren mit einem Überdach überspannt werden. Dieses Überdach kann beispielsweise dem Staubschutz oder auch dem Schutz vor anderweitigen Verunreinigungen dienen.

In einer alternativen Ausführungsform der Erfindung ist das Gestell aus Rahmenelementen aufgebaut, ein Rahmenelement weist mindestens zwei Seitenpfosten und mindestens zwei Querstreben auf und die Rahmenelemente halten jeweils mindestens ein flexibles Wandelement. Das Gestell zur Halterung der flexiblen Wandelemente kann aus einzelnen Rahmenelementen aufgebaut sein. Beispielsweise können die Rahmenelemente aus Aluminiumprofilabschnitten aufgebaut sein. Durch die Verwendung von Aluminiumprofilabschnitten ist eine einfache Möglichkeit gegeben die Rahmenelemente modular aufzubauen. Die Rahmenelemente weisen jeweils mindestens zwei, insbesondere genau zwei Seitenpfosten und mindestens zwei Querstreben, insbesondere genau zwei Querstreben auf. Zudem kann durch die Wahl unterschiedlich langer Aluminiumprofilabschnitte die Größe der Rahmenelemente leicht an die gewünschten Gegebenheiten angepasst werden. Im aufgebauten Zustand sind die Seitenpfosten vorzugsweise senkrecht zur Aufstellfläche des Gestells angeordnet. Die Seitenpfosten weisen jeweils an ihren Enden eine Verbindung zu den Querstreben auf, so dass ein Rahmenelement gebildet ist. Auf die Rahmenelemente können die flexiblen Wandelemente einfach aufgespannt werden. Beispielsweise können diese mit diversen Befestigungsmöglichkeiten wie Druckknöpfen, Klettverschlüssen, Nietverbindungen oder Ähnlichen an die Querstreben und Seitenpfosten befestigt werden. Vorzugsweise ist die von einem Rahmenelement aufgespannte Fläche komplett von einem flexiblen Wandelement abgedeckt. Durch den Aufbau des Gestells aus Rahmenelementen ist ein einfacher, individuell anpassbarer modularer Aufbau der Laserschutzvorrichtung gegeben. In einer einfachen Form der Laserschutzvorrichtung können die Rahmenelemente so verbunden werden, dass ein abzuschirmender Raum in alle vier Seitenrichtungen abgeschirmt ist. Hierzu können die Rahmenelemente beispielsweise so angeordnet werden, dass zwei Rahmenelemente jeweils einen rechten Winkel zueinander aufspannen. Allerdings sind auch umgebende Flächen mit individuell gestaltbaren Grundflächen, beispielsweise mit einer L-förmigen Grundfläche, einer sechsseitigen Grundfläche oder Ähnliches möglich. Zudem können die Rahmenelemente an ihrer dem Erdboden zugewandten querstrebe Rollen aufweisen, um eine Verfahrbarkeit der Laserschutzvorrichtung zu gewährleisten.

In einer Weiterbildung der Erfindung weist mindestens ein Seitenpfosten eines Rahmenelementes mindestens eine seitlich herausragende Verbindungslasche auf, die Verbindungslasche ist parallel zu einer von dem Rahmenelement aufgespannten Ebene angeordnet und mindestens ein Seitenpfosten weist eine zu einer Verbindungslasche korrespondierende Aufnahmeöffnung auf. Mindestens ein Seitenpfosten weist mindestens eine Verbindungslasche, insbesondere eine starre Verbindungslasche, zur Verbindung des Rahmenelementes mit einem weiteren Rahmenelement zur Ausbildung einer Seitenwand auf. Vorzugsweise weist ein erster Seitenpfosten eines Rahmenelementes zwei Verbindungslaschen auf, während ein zweiter Seitenpfosten des Rahmenelementes zwei korrespondierende Aufnahmeöffnungen zur Aufnahme der Verbindungslaschen eines zweiten Rahmenelementes aufweist, so dass die beiden Rahmenelemente verbunden werden können. Die Verbindungslaschen können beispielsweise flächig ausgebildet sein und aus Metall, beispielsweise aus Aluminium bestehen. Die Verbindungslaschen sind parallel zu einer von dem Rahmenelement aufgespannten imaginären Ebene angeordnet, also parallel zu einer von den Seitenpfosten und Querstreben aufgespannten Ebene. Die Aufnahmeöffnungen sind korrespondierend zu den Verbindungslaschen ausgebildet, das heißt das sie in Größe und Form ihres Querschnittes an die Verbindungslaschen angepasst sind. Beispielsweise können die, von dem zu umgebenden Raum aus gesehenen, rechten Seitenpfosten jeweils zwei Verbindungslaschen aufweisen, während die, vom Raum aus gesehenen, linken Seitenpfosten entsprechende Aufnahmeöffnungen aufweisen. Die Verbindungslaschen sowie die jeweils korrespondierenden Aufnahmeöffnungen sind, von der unteren Querstrebe aus gesehen, in gleicher Höhe angeordnet, so dass bei Nebeneinanderanordnung zweier Rahmenelemente die Verbindungslaschen von den Aufnahmeöffnungen aufgenommen werden können.

In einer Weiterbildung der Erfindung ist mindestens eine Seitenwand aus mindestens zwei Rahmenelementen ausgebildet, mindestens eine Lasche eines ersten Rahmenelementes ist in die Aufnahmeöffnung eines zweiten benachbarten Rahmenelementes aufgenommen und die nebeneinander angeordneten Rahmenelemente sind mit Schnellspannverschlüssen miteinander verbunden. Zur Ausbildung einer Seitenwand können beliebig viele Rahmenelemente nebeneinander angeordnet sein. Hierbei können die Rahmenelemente auch unterschiedliche Rahmengrößen aufweisen. Hierbei werden die, in der von den Rahmenelementen aufgespannten Ebene angeordneten Verbindungslaschen, die seitlich aus den jeweiligen Seitenpfosten herausragen, in die korrespondierenden Aufnahmeöffnungen des benachbarten Rahmenelementes aufgenommen. Durch die Aufnahme der Verbindungslaschen eines Rahmenelementes in die Aufnahmeöffnungen eines zweiten Rahmenelementes ist ein Verschieben der beiden Rahmenelemente senkrecht zur von den Rahmenelementen aufgespannten Ebene unterbunden. Zwei nebeneinander angeordnete Rahmenelemente können zusätzlich mit Schnellspannverschlüssen miteinander verbunden sein. Bei den Schnellspannverschlüssen kann es sich insbesondere um Hebelspannverschlüsse handeln, wobei ein erster Seitenpfosten eines Rahmenelementes einen Haken aufweist und ein zweiter Seitenpfosten des Rahmenelementes den korrespondierenden Hebel aufweist. Somit können beim nebeneinander Anordnen zweier Rahmenelemente die Haken des einen Rahmenelementes mit den Hebeln des anderen Rahmenelementes verbunden werden. Weiterhin kann eine Laserschutzvorrichtung zur Übereckanordnung zweier Rahmenelemente für jede Ecke ein pfostenartiges Eckelement aufweisen. Ein pfostenartiges Eckelement kann aus einem vierkantigen Profilabschnitt bestehen und Verbindungslaschen und Aufnahmeöffnungen aufweisen. Vorzugsweise sind die Verbindungslaschen an zwei benachbarten Seiten des Eckelementes angeordnet, so dass diese einen rechten Winkel aufspannen. Zudem können Schnellspannverschlüsse an dem Eckelement zur Verbindung mit den Übereck angeordneten Rahmenelementen angeordnet sein. Weiterhin können die Seitenpfosten zweier eine Seitenwand ausbildender Rahmenelemente über Verbindungselemente verbunden sein, die an der Außenseite, also an der der abzudeckenden Laserlichtquelle abgewandten Seite, der Seitenpfosten der Rahmenelemente angeordnet sind. Beispielweise können die Verbindungselemente parallel zu der von den Rahmenelementen aufgespannten Ebene angeordnet sein. Insbesondere kann hierbei ein erster Seitenpfosten eines Rahmenelementes laschenartige Vorsprünge aufweisen, die seitlich über den Seitenpfosten hinausragen und ein zweiter Seitenpfosten des Rahmenelementes kann taschenartige Aufnahmeelemente zur Aufnahme der laschenartigen Vorsprünge eines benachbarten Rahmenelementes aufweisen. Die laschenartigen Vorsprünge und die korrespondierend ausgebildeten Aufnahmeelemente können hierbei im Wesentlichen flächig ausgebildet sein und beispielsweise über Schraubverbindungen mit den die Rahmenelemente ausbildenden Aluminiumprofilabschnitten verbunden sein.

In einer Weiterbildung der Erfindung weist die Laserschutzvorrichtung mindestens ein Deckenelement auf, das mindestens eine Deckenelement ist aus mindestens einem Deckenrahmenelement mit Deckenseitenpfosten ausgebildet und die Deckenseitenpfosten des Deckenrahmenelementes sind aus zwei miteinander über mindestens eine Gelenkverbindung verbundenen Deckenseitenpfostenabschnitten ausgebildet. Zur Abschirmung einer Laserquelle in alle Raumrichtungen kann eine Laserschutzvorrichtung ein Deckenelement aufweisen, das ein Dach der Laserschutzvorrichtung ausbildet. Ein Deckenelement kann aus mindestens einem Deckenrahmenelement ausgebildet sein. Die Deckenrahmenelemente weisen Deckenseitenpfosten und Querstreben auf und können wie die, die Seitenwände ausbildenden Rahmenelemente der Laserschutzvorrichtung aus Aluminiumprofilabschnitten ausgebildet sein. Die Deckenrahmenelemente sind zur Anordnung an den oberen Querstreben, der die Seitenwände ausbildenden Rahmenelemente vorgesehen. Um eine vereinfachte Handhabung der Deckenrahmenelemente und der gesamten Laserschutzvorrichtung zu ermöglichen, sind die Deckenseitenpfosten der Deckenrahmenelemente aus mindestens zwei, über mindestens eine Gelenkverbindung miteinander verbundenen, Deckenseitenpfostenabschnitten ausgebildet. Die Deckenseitenpfostenabschnitte können beispielsweise gleichlang ausgebildet sein und aus Aluminiumprofil bestehen. Vorzugsweise sind die Gelenkverbindungen durch Scharnierverbindungen ausgebildet. Die Drehachse der Scharnierverbindung ist hierbei vorzugsweise an der, dem zu umgebenden Raum abgewandten Seite der Deckenseitenpfosten angeordnet. An der, der Gelenkverbindung gegenüberliegenden Seite der Deckenseitenpfosten können Schnellspannverschlüsse zum Sichern der Deckenseitenpfostenabschnitte im ausgeklappten Zustand angeordnet sein. Im montierten Zustand sind die Schnellspannverschlüsse an der, der Laserlichtquelle zugewandten Seite des Deckenelementes angeordnet. Zur Verbindung eines Deckenrahmenelementes mit den oberen Querstreben der, die Seitenwände ausbildenden Rahmenelemente weist das Deckenrahmenelement parallel zu dessen äußeren Querstreben angeordnete Verbindungsstreben auf. Die Verbindungsstreben können über Gelenkverbindungen, insbesondere über Scharnierverbindungen, mit den Deckenseitenpfosten der Deckenrahmenelemente verbunden sein. Die Drehachse der Scharnierverbindungen ist hierbei an der, der Laserlichtquelle zugewandten Seite der Deckenseitenpfosten und der Verbindungsstreben angeordnet. Die Verbindungsstreben ragen aus der von den Deckenrahmenelementen aufgespannten Ebene heraus und sind im montierten Zustand des Deckenelementes unterhalb der Querstreben des Deckenelementes angeordnet. Zur Montage des Deckenrahmenelementes werden die Verbindungsstreben oberhalb der oberen Querstreben der die Seitenwände ausbildenden Rahmenelemente und parallel zu diesen angeordnet und mit diesen verbunden. Die Verbindung kann hierbei über Verbindungslaschen und Aufnahmeöffnungen, analog zur Verbindung der Rahmenelemente untereinander, erfolgen. Die Verbindungsstreben sind im montierten Zustand zwischen den Querstreben des Deckenelementes und den oberen Querstreben der Rahmenelemente angeordnet. An der, der Laserlichtquelle abgewandten Seite können die Verbindungsstreben des Deckenelementes mit den Rahmenelementen über Schnellspannverbindungen gesichert sein. Durch die Scharnierverbindungen ist ein Klappen der Deckenseitenpfostenabschnitte nach unten ermöglicht. Zur Montage einer Laserschutzvorrichtung wird ein Deckenrahmenelement, insbesondere die Verbindungsstreben des Deckenrahmenelementes, mit den Querstreben von zwei Seitenwänden in Verbindung gebracht. Vorzugsweise befindet sich das Deckenrahmenelement hierbei im teilweise zusammengeklappten Zustand. Die Scharnierverbindung der Deckenseitenpfosten weist während der Montage vorzugsweise einen geringeren Abstand zum Boden als die oberen Querstreben der Seitenrahmenelemente auf. Das zu montierende Deckenrahmenelement zeigt im teilzusammengeklappten Zustand in einer Seitenansicht eine V-förmige Form, wobei der unterste Punkt des V-förmigen Deckenrahmenelementes unterhalb der Höhe der Oberkante der Seitenwände angeordnet ist. Durch ein Verschieben des Verbindungsbereiches der beiden Deckenseitenpfostenabschnitte nach oben wird das Deckenrahmenelement in einen ausgeklappten Zustand verbracht, so dass die Deckenseitenpfostenabschnitte eine gemeinsame Symmetrieachse aufweisen. Hierbei wird der Abstand der beiden mit dem Deckenrahmenelement verbundenen Seitenelement vergrößert, wobei die parallele Anordnung der Seitenwände zueinander erhalten bleibt. Vorzugsweise spannen die Seitenwände im ausgeklappten Zustand des Deckenrahmenelementes jeweils einen rechten Winkel mit dem Deckenrahmenelement auf. Somit ist eine einfache und sichere Montage der Deckenelemente ermöglicht. Das Ausklappen des geklappten Deckenrahmenelementes, also das Aufstellen des Daches, kann beispielsweise durch mechanische, elektrische, hydraulische oder anderweitige Einrichtungen unterstützt sein.

In einer Weiterbildung der Erfindung sind die über eine Gelenkverbindung verbundenen Deckenseitenpfostenabschnitte im ausgeklappten Zustand mit einem Schnellspannverschluss gesichert. Zwei Deckenseitenpfostenabschnitte sind mit einer Gelenkverbindung, insbesondere einer Scharnierverbindung, miteinander verbunden. An ihrer der Gelenkverbindung abgewandten Seite weisen die Deckenseitenpfosten Schnellspannverschlüsse auf, um die im aufgeklappten Zustand in Kontakt tretenden Enden der Deckenseitenpfostenabschnitte zu sichern. Beispielsweise kann ein Deckenseitenpfostenabschnitt einen Haken aufweisen, während der weitere Deckenseitenpfostenabschnitt einen entsprechenden Hebel aufweist, so dass mit dem Hebelspannverschluss eine sichere Verbindung hergestellt sein kann. Ein ungewolltes Einklappen des Deckenelementes im montierten Zustand ist somit verhindert. Ebenfalls können die Verbindungen der Querstreben bzw. der Verbindungsstreben des Deckenrahmenelementes mit den Querstreben bzw. den Seitenpfosten der die Seitenwände ausbildenden Rahmenelemente über Schnellspannverschlüsse, insbesondere Hebelspannverschlüsse, im aufgebauten Zustand, also bei ausgeklapptem Deckenelement, gesichert sein. Somit ist aus beispielsweise einem Deckenrahmenelement und zwei, zwei Seitenwände ausbildenden parallel zueinander ausgerichteten Rahmenelementen eine verfahrbare Einheit ausgebildet. Diese kann auf einfache Art und Weise zu ihrem Verwendungsort verfahren werden. Zur platzsparenden Lagerung können die, das Deckenrahmenelement sichernden, Schnellspannverschlüsse gelöst werden und der durch Gelenkverbindungen verbundene Bereich der Deckenseitenpfostenabschnitt kann heruntergezogen werden. Hierbei werden die Seitenwände aufeinander zu bewegt, wobei die Seitenwände parallel zueinander ausgerichtet bleiben. Die von der verfahrbaren Einheit eingenommene Fläche ist somit erheblich reduziert. Mehrere verfahrbare Einheiten können miteinander zu einer, an die jeweiligen Anforderungen angepassten Laserschutzvorrichtung verbunden werden. Zudem können verschließbare Türbereiche aufweisende Rahmenmodule oder Stirnseitenmodule vorgesehen sein, von denen offene Stirnseiten der miteinander verbundenen verfahrbaren Einheiten abgedeckt werden können. In einer Weiterbildung der Erfindung sind an mindestens einer Querstrebe eines Rahmenelementes mindestens vier Ausleger angeordnet, an jedem Ausleger ist mindestens eine Rolle angeordnet, die Ausleger sind senkrecht zu einer von dem Rahmenelement aufgespannten Ebene angeordnet, jeweils mindestens zwei Ausleger erstrecken sich zu jeder Seite der aufgespannten Ebene und alle Ausleger sind entlang einer Querstrebe in unterschiedlichen Abständen zu einem Seitenpfosten angeordnet. Jeweils mindestens zwei Ausleger ragen zu jeder Seite der aufgespannten Ebene hervor und mindestens zwei zur gleichen Seite ragende Ausleger weisen unterschiedliche Längen auf. Um eine Verfahrbarkeit und eine Kippstabilität der Seitenwände zu gewährleisten, weisen die unteren Querstreben seitliche Ausleger auf, wobei die Ausleger vorzugsweise mit dem unteren Querstreben jeweils rechte Winkel aufspannen. Bei den Auslegern kann es sich um Aluminiumprofilabschnitte handeln. Die Ausleger, die senkrecht zu der von dem jeweiligen Rahmenelement aufgespannten imaginären Ebene stehen, weisen Rollen auf, um eine Verfahrbarkeit der jeweiligen Seitenwand zu gewährleisten. Beispielsweise kann ein Rahmenelement vier seitliche Ausleger aufweisen, wobei zwei zu einer Seite herausragende Ausleger unterschiedliche Längen aufweisen. Beispielsweise kann ein, auf einer Seite dem ersten Seitenpfosten zugeordneter Ausleger eine größere Länge als ein dem zweiten Seitenpfosten zugeordneter Ausleger aufweisen. Auf der anderen Seite der von dem Rahmenelement aufgespannten imaginären Ebene, ist der dem ersten Seitenpfosten zugeordnete Ausleger entsprechend kürzer als der dem zweiten Seitenpfosten zugeordnete Ausleger. Entlang der Strecke zwischen dem ersten Seitenpfosten und dem zweiten Seitenpfosten sind die Ausleger in unterschiedlichen Abständen zum ersten Seitenpfosten an der unteren Querstrebe angeordnet. Durch diese in einer Draufsicht asymmetrische Anordnung um die untere Querstrebe ist ein geringerer Abstand zwischen den Seitenwänden ermöglicht, wenn diese beispielsweise mit montiertem Deckenelement aufeinander zu geschoben sind. Ein einfacheres Manövrieren der verfahrbaren Einheit aus Deckenelementen und Seitenelementen im zusammengeklappten Zustand des Deckenelementes und zudem eine platzsparende Lagerung ist somit ermöglicht. Die Ausleger können an ihrer der Laserlichtquelle zugewandten Seite von den flexiblen Wandelementen verdeckt sein.

In einer Weiterbildung der Erfindung ist zwischen den Seitenpfosten zweier benachbarter Rahmenelemente eine Kederfahne mit einem kederartigen Abdeckelement angeordnet, das kederartige Abdeckelement besteht zumindest abschnittweise aus einem laserlichtundurchlässigem Material und die kederartige Abdeckung deckt den Verbindungsspalt zwischen zwei Rahmenelementen ab. Zwischen zwei Seitenpfosten zweier benachbarter Rahmenelemente, die beispielsweise eine Seitenwand ausbilden, ist eine Kederfahne angeordnet. Bei der Kederfahne kann es sich um ein textiles Flächengebilde handeln, das an die Abmessungen der Seitenflächen der Seitenpfosten angepasst ist. Auf mindestens einer Seite weist die Kederfahne ein kederartiges Abdeckelement auf. Das kederartige Abdeckelement kann als eine wulstartige Verdickung, also als eine Kederwulst, ausgebildet sein und zumindest an seiner Außenseite aus einem laserlichtundurchlässigen Material bestehen. Durch die Anordnung der Kederfahne zwischen zwei Seitenpfosten zweier benachbarter Rahmenelemente kann das kederartige Abdeckelement beispielsweise an der, der Laserlichtquelle zugewandten Seite, der Rahmenelemente in den abzuschirmenden Raum hineinragen und den möglichen Verbindungsspalt zwischen zwei Rahmenelementen abdecken. Durch die kederartigen Abdeckelemente sind somit Verbindungsbereiche zwischen den Rahmenelementen abgedeckt. Die Rahmenelemente bestehen vorzugsweise aus metallischem Material, an dem es zu Reflektionen eines Laserstrahls kommen kann. Um sicherzustellen, dass der abzuschirmende Laserstrahl auf keinen der metallischen Bereiche der Rahmenelemente trifft und um somit mögliche Reflektionen zu verhindern, sind die Verbindungsbereiche durch die kederartigen Abdeckelemente abgedeckt. Die Abdeckelemente bestehen hierzu aus laserlichtundurchlässigem Material. Zudem ist das Material aus dem die kederartigen Abdeckelemente bestehen, nichtreflektierend ausgebildet, so dass ein Laserstrahl an den Abdeckelementen nicht reflektiert werden kann.

In einer Weiterbildung der Erfindung weisen die flexiblen Wandelemente an ihren Längsseiten jeweils mindestens einen Keder auf und die Seitenpfosten weisen jeweils mindestens eine Kederführungsschiene auf. Die flexiblen Wandelemente weisen an ihren Längsseiten Keder auf. Bei den Kedern kann es sich beispielsweise um wulstartige Randverstärkungen der aus flexiblem textilem Flächengebilde bestehenden Wandelemente handeln. Zur Aufnahme der Keder der Wandelemente weisen die Seitenpfosten eines Rahmenelementes Kederführungsschienen auf. In die Kederführungsschienen können die Keder der Längsseiten der Wandelemente eingefügt werden, so dass ein Rahmenelement mit den flexiblen Wandelementen bespannt werden kann.

In einer Weiterbildung der Erfindung ist mindestens ein, eine Kederschiene aufweisender Seitenpfosten über Gelenkverbindungen mit den Querstreben des Rahmenelementes klappbar verbunden. Zum Bespannen der Rahmenelemente mit laserlichtundurchlässigen Wandelementen kann ein Seitenpfosten des Rahmenelementes über Gelenkverbindungen, insbesondere über Scharnierverbindungen mit der oberen und der unteren Querstrebe verbunden sein. Vorzugsweise ist die Drehachse der Scharnierverbindungen hierbei an der, der Laserlichtquelle zugewandten Seite des Rahmenelementes angeordnet. Zum Bespannen des Rahmenelementes mit einem flexiblen Wandelement wird der klappbar angeordnete Seitenpfosten aus der Ebene des Rahmenelementes herausgeklappt. In dem abgeklapptem Zustand des Seitenpfostens wird ein an den Längsseiten Keder aufweisendes flexibles Wandelement in die Kederführungsschienen der Seitenpfosten eingezogen. In diesem abgeklappten Zustand ist das flexible Wandelement nicht unter Zugspannung. Durch ein Zurückklappen des klappbar befestigten Seitenpfostens in die Ebene des Rahmenelementes wird das flexible Wandelement über die Rahmenfläche des Rahmenelementes gespannt. Um ein Wiederaufklappen des Seitenpfostens zu verhindern, ist an der, der Gelenkverbindung abgewandten Seite des Rahmenelementes ein Schnellspannverschluss angeordnet. Beispielsweise können an den Querstreben Verbindungshebel angeordnet sein, die mit an dem Seitenpfosten angeordneten Haken in Verbindung gebracht werden. Somit ist ein einfaches Bespannen der Rahmenelemente mit flexiblen Wandelementen ermöglicht.

In einer Weiterbildung der Erfindung weist mindestens ein von mindestens einem Rahmenelement gehaltenes Wandelement eine die Ausleger aufweisende Querstrebe überragende Schürze auf. Von den Rahmenelementen werden laserlichtundurchlässige Wandelemente gehalten. Diese dienen dazu, dass kein Laserlicht vom Inneren des zu umgebenden Raumes nach außen gelangt. Um auch einen Austritt von Laserlicht unterhalb der unteren Querstreben der Rahmenelemente, also unterhalb der die Ausleger aufweisenden Querstreben zu verhindern, weisen die Wandelemente Schürzen auf, die über die untere Querstrebe hinausragen. Vorzugsweise reicht hierbei die Schürze bis auf den Boden, um eine sichere Abschirmung des umgebenden Innenraumes zu erreichen. Hierbei kann die Schürze auf dem Boden schleifen. Die Schürze kann beispielsweise durch einen über die untere Querstrebe verlängerten Abschnitt des Wandelementes ausgebildet sein.

In einer weiteren Ausführungsform der Erfindung ist mindestens eine Seitenwand aus mindestens zwei miteinander verbundenen Rahmenelementen aufgebaut, mindestens eine Querstrebe eines Rahmenelementes weist Rollen auf, mindestens ein Seitenpfosten mindestens eines Rahmenelementes weist Verbindungsstücke zur Verbindung mit mindestens einem Seitenpfosten eines weiteren Rahmenelementes auf. Zur Verfahrbarkeit der Rahmenelemente können Rollen an einer Querstrebe, vorzugsweise der der Aufstellfläche zugwandten Querstrebe aufweisen. Um einen modularen Aufbau zu erleichtern weist mindestens ein Seitenpfosten, insbesondere genau ein Seitenpfosten eines Rahmenelementes, vorzugsweise aller Rahmenelemente, mindestens ein Verbindungsstück, vorzugsweise mehrere Verbindungsstücke zur Verbindung des Rahmenelementes mit einem weiteren Rahmenelement auf. Bei den Verbindungsstücken kann es sich beispielsweise um Verbindungslaschen handeln, die mit dem Aluminiumprofilabschnitt eines benachbarten Seitenpfostens verbunden werden können. Beispielsweise können die Verbindungslaschen Öffnungen aufweisen, durch die die Aluminiumprofilabschnitte der Seitenpfosten miteinander verschraubt werden können.

In einer Weiterbildung der Erfindung sind an mindestens einer Querstrebe mindestens eines Rahmenelementes mindestens zwei Ausleger angeordnet und an jedem Ausleger sind mindestens zwei Rollen angeordnet. Die Ausleger können beispielsweise ebenfalls durch Aluminiumprofilabschnitte ausgebildet sein. Vorzugsweise sind diese an der dem Erdboden zugewandten Querstrebe angeordnet. Beispielsweise können die Ausleger und die Querstreben einen rechten Winkel aufspannen, so dass beim Aufstellen des Rahmenelementes eine hohe Kippstabilität durch die Ausleger gegeben ist. An der der Aufstellfläche zugewandten Seite der Ausleger sind Rollen angeordnet, die zum Verfahren der Rahmenelemente vorgesehen sind.

In einer Weiterbildung der Erfindung ist mindestens eine Seitenwand aus mindestens einem Ausleger aufweisenden Rahmenelement und mindestens einem keine Ausleger aufweisenden Rahmenelement aufgebaut. Durch den Aufbau einer Seitenwand aus mindestens einem, insbesondere einem Rahmenelement mit Auslegern und mindestens einem Rahmenelement, insbesondere einem Rahmenelement ohne Ausleger ist eine individuelle, modulare Kombinierbarkeit der Rahmenelemente zu Schutzwänden gegeben. Durch die Anordnung eines keine Ausleger aufweisenden Rahmenelementes und einem Ausleger aufweisenden Rahmenelement können sich beim Übereck-Anordnen von Seitenwänden die Ausleger nicht räumlich behindern und dennoch ist eine hinreichend große Kippstabilität gegeben.

In einer Weiterbildung der Erfindung ist der abzuschirmende Raum von mehreren Seitenwänden umgeben und von den an den Ecken des Raumes miteinander verbundenen Seitenwänden weist jeweils nur eine Seitenwand Ausleger auf. Dadurch, dass an den Ecken des abzuschirmenden Raumes immer eine Seitenwand mit Auslegern mit einer Seitenwand ohne Ausleger verbunden ist, ist eine hohe Anpassbarkeit der Form der Grundfläche des abzuschirmenden Raumes durch die Schutzwände gegeben, da es nicht zu einer gegenseitigen Behinderung der Ausleger zweier nebeneinander angeordneter Seitenwände kommt.

In einer Weiterbildung der Erfindung ist mindestens ein Wandelement zumindest abschnittsweise als ein Türbereich ausgebildet. Ein flexibles Wandelement kann zumindest abschnittsweise als ein Türbereich bzw. als ein Eingangsbereich ausgebildet sein. Der Türbereich kann beispielsweise durch eine Öffnung in dem Wandelement gegeben sein, wobei die Öffnung vorzugsweise wieder verschließbar ist. Des Weiteren ist es möglich, dass ein flexibles Wandelement als ein Rollvorhang ausgebildet ist. Dieser Rollvorhang kann beispielsweise an einem Dachträgerteil aufgehängt werden und ist vorzugweise an eine Öffnung in einem weiteren Wandelement angepasst. Bei Bedarf kann der Rollvorhang nach oben hin aufgerollt werden. Zum Wiederverschließen der Laserschutzvorrichtung wird der Rollvorhang abgerollt und an seinen Seiten mit den benachbarten Wandelementen bzw. den Rändern einer Öffnung in einem Wandelement, beispielsweise mittels eines Klettverschlusses, verbunden, so dass eine abgeschlossene Umhüllung gegeben ist. Durch die Verwendung eines Rollvorhangs ist eine besonders einfache Ausbildung eines Türbereiches gegeben, der ein problemloses Betreten der Laserschutzvorrichtung ermöglicht.

In einer Weiterbildung der Erfindung weisen die Wandelemente und die Deckenelemente Verbindungselemente auf. Die Wandelemente und das Deckenelement sind durch die Verbindungselemente miteinander verbunden. Als Verbindungselemente können beispielsweise Klettstreifen zum Einsatz kommen, die vorzugsweise an den Außenkanten der Wandelemente bzw. des Deckenelementes angeordnet sind. Durch die Klettstreifen können zwei benachbarte Wandelemente miteinander bzw. mit einem benachbarten Deckenelement laserlichtdicht verbunden werden. Zudem ist durch die Verwendung von Klettverbindungen eine flexible Anpassung an die örtlichen Gegebenheiten sowie ein schneller Auf- und Abbau ermöglicht.

In einer Weiterbildung der Erfindung besteht mindestens ein Wandelement zumindest abschnittsweise aus einem laserlichtundurchlässigen und für Teile des sichtbaren Lichtes durchlässigen Material. Bei dem Material kann es sich beispielsweise um PVC oder Polycarbonat oder einen ähnlichen laserlichtundurchlässigen Kunststoff handeln. Durch diese Materialien können die Wellenlängen des Laserlichtes nicht durchdringen, wohl aber andere Wellenlängen des sichtbaren Lichtes. Auch ist es möglich, dass die Laserschutzvorrichtung eine elektronische Überwachungseinheit, beispielsweise eine Kamera, aufweist, die bildsignalleitend mit einem außerhalb des abgeschirmten Bereiches angeordneten Bildschirm verbunden ist. Die bildsignalleitende Verbindung kann beispielsweise über eine Kabelverbindung, eine Bluetooth-Verbindung oder ähnliches gegeben sein. Somit ist es möglich, durch diesen Bereich in die Laserschutzvorrichtung hinein zu blicken, ohne die Laserschutzvorrichtung öffnen zu müssen und somit den Austritt von Laserstrahlung zu ermöglichen. Durch den für sichtbares Licht durchlässigen, aber laserlichtundurchlässigen Bereich ist somit ein Laserschutzfenster gegeben.

In einer Weiterbildung der Erfindung sind die Wandelemente lamellenartig ausgebildet. Durch einen lamellenartigen Aufbau der Wandelemente bzw. einen bahnenförmigen Aufbau der Wandelemente ist eine sehr flexible räumliche Anpassbarkeit der Laserschutzvorrichtung ermöglicht. Bei einem lamellenartigen Aufbau können die einzelnen Lamellen durch Verbindungselemente, beispielsweise durch Klettstreifen, miteinander verbunden werden. Die Seitenpfosten werden in diesem Fall zur zusätzlichen Befestigung für die Lamellen bzw. für die Wandelemente genutzt. Hierdurch ist es ermöglicht, die Laserschutzvorrichtung individuell an die Größe der abzuschirmenden Fläche anzupassen. Die Seitenwände können durch das Verbinden mehrerer Wandelemente entsprechend verbreitert werden.

In einer Weiterbildung der Erfindung ist zumindest ein Wandelement mehrlagig ausgebildet und zwischen zumindest zwei Lagen mindestens eines Wandelementes ist mindestens ein Sensorelement angeordnet. Die Wandelemente können mehrlagig aus verschiedenen Materialien, insbesondere textilen Materialien, ausgebildet sein. Insbesondere kann die der Laserlichtquelle zugewandte Seite eines Wandelementes aus einem laserlichtreflektierenden bzw. laserlichtstreuenden Material aufgebaut sein. Beispielsweise kann die reflektierende bzw. streuende Wirkung durch eine Beschichtung gegeben sein. In einer Mittelschicht kann eine Sensoreinrichtung angeordnet sein. Diese aktive Schutzeinrichtung bewirkt bei auftreffender Strahlung oberhalb einer definierten, sensorspezifischen Reaktionsschwelle eine sofortige Abschaltung der angeschlossenen Laserquelle. Hierzu weist die Schutzeinrichtung zumindest eine Auswerteeinrichtung und eine datenleitende Verbindung zu der Laserlichtquelle auf. Diese kann bei Feststellung einer durch den auftreffenden Laserstrahl hervorgerufenen erhöhten Energie ein Signal ausgeben, das zur Deaktivierung des Lasers führt. Hierzu kann die Sensoreinrichtung signalleitend mit der Laserlichtquelle verbunden sein. Durch die Verwendung eines Sensors in den Wandelementen bzw. in dem Deckenelement ist eine Erhöhung der Lasersicherheit gegeben. Beispielsweise kann die Sensoreinrichtung eine beidseitig mit Kohlenstoff beschichtete Folie aufweisen. Wird die Folie durch das Auftreffen eines Laserstrahls beschädigt, kommt es zu einem Kurzschluss, der zu einer Abschaltung der Laserlichtquelle führt.

In einer Weiterbildung der Erfindung weist mindestens ein flexibles Wandelement eine Fensteröffnung auf, und die Fensteröffnung weist an mindestens zwei Seiten Einschubtaschen zur Aufnahme einer Fensterscheibe auf. Die flexiblen Wandelemente können unterschiedlich ausgebildet sein, beispielsweise kann ein Wandelement komplett geschlossen sein, es kann ein Laserschutzfenster aus verschiedenem Material, beispielsweise Glas, Polycarbonat, Acryl oder Plexiglas eingearbeitet sein, oder das Wandelement weist eine Fensteröffnung auf, die Einschubtaschen an zumindest zwei Seiten der Öffnung aufweist. Beispielsweise kann die Fensteröffnung an der oberen und an der unteren Öffnungsseite sowie an einer seitlichen Seite Einschubtaschen aufweisen. In diese Einschubtaschen können Fensterscheiben entsprechender Größe aus verschiedenen Materialien, wie beispielsweise Glas, Polycarbonat, Acryl oder Plexiglas eingeschoben werden. Die Fensteröffnung wird hierbei vollständig durch die Fensterscheibe abgedeckt. Durch die Aufnahmemöglichkeit verschiedener Fensterscheiben aus verschiedenen Materialien ist eine leichte Anpassung der Fensterscheiben an unterschiedliche Bedingungen, je nachdem welche Tätigkeit in der Umhäusung verrichtet wird oder welche Laserschutzklasse abzuschirmen ist. Beispielsweise können bei einem Vierecksystem an allen vier Seitenwänden Laserschutzfenster verschiedener Materialien in einer Stärke von beispielsweise 5mm eingebracht sein, damit Sichtkontakt zum Innenraum besteht. Dies kann von großer Bedeutung für die Anwendbarkeit sein, da es teilweise Vorschrift ist, einen Sichtkontakt zum Innenraum zu gewährleisten. Die Schutzstufe richtet sich nach der Tätigkeit, die in der Einhäusung verrichtet wird bzw. nach der Wellenlänge und Brennweite des eingesetzten Lasers.

Nachfolgend wird die Erfindung anhand eines in der Zeichnung dargestellten Ausführungsbeispiels weiter erläutert. Im Einzelnen zeigen die schematischen Darstellungen in:
- Fig. 1:: eine perspektivische Darstellung eines zusammengeklappten Gestelles;
- Fig. 2:: ein ausgeklapptes Gestell in einer Seitenansicht;
- Fig. 3:: ein ausgeklapptes Gestell mit aufgezogenem Überdach und eingefahrenen Eckpfosten;
- Fig. 4:: ein aufgestelltes Gestell mit eingehängtem Deckenelement in einer Teilansicht;
- Fig. 5:: die dem abzuschirmenden Raum abgewandte Seite des Deckenelementes mit Befestigungsmitteln;
- Fig. 6:: ein zwischen einem Eckpfosten und einem Seitenpfosten aufgespanntes Wandelement;
- Fig. 7: eine Laserschutzvorrichtung mit eingehängten Wandelementen und Deckenelement in einer Teilansicht;
- Fig. 8:: eine Laserschutzvorrichtung mit einem geschlossenen Türbereich in einer Teilansicht;
- Fig. 9:: eine Laserschutzvorrichtung mit einem geöffneten Türbereich in einer Teilansicht;
- Fig. 10a:: ein Rahmenelement mit Verbindungsstücken;
- Fig. 10b:: ein Rahmenelement mit Verbindungsstücken, Auslegern und Rollen;
- Fig. 11:: eine Laserschutzvorrichtung mit vier aus Rahmenelementen aufgebauten Seitenwänden in einer Draufsicht;
- Fig. 12a:: ein Rahmenelement mit einem flexiblen Wandelement;
- Fig. 12b:: ein Rahmenelement mit einem flexiblen Wandelement mit einem Fensterbereich;
- Fig. 12c:: ein Rahmenelement mit einer Fensteröffnung mit Einschubtaschen;
- Fig. 13a:: ein bespanntes Rahmenelement einer alternativen Ausführungsform mit Verbindungslaschen und Aufnahmeöffnungen;
- Fig. 13b:: ein Eckelement mit Verbindungslaschen und Aufnahmeöffnungen;
- Fig. 14a:: Seitenwände mit Deckenelement im teilgeklappten Zustand in einer Seitenansicht;
- Fig. 14b:: Seitenwände mit montiertem Deckenelement;
- Fig. 15: aneinander geschobene Rahmenelemente in einer Draufsicht;
- Fig. 16a:: Seitenwände mit kederartigem Abdeckelement;
- Fig. 16b:: verbundene Rahmenelemente mit dazwischen angeordnetem kederartigem Abdeckelement;
- Fig. 17a:: Rahmenelement mit klappbaren Seitenpfosten;
- Fig. 17b:: Rahmenelement mit Kederführungsschienen und abgeklapptem Seitenpfosten in einer Draufsicht; und
- Fig. 17c.: Rahmenelement gemäß Fig. 17b mit gespanntem Wandelement.

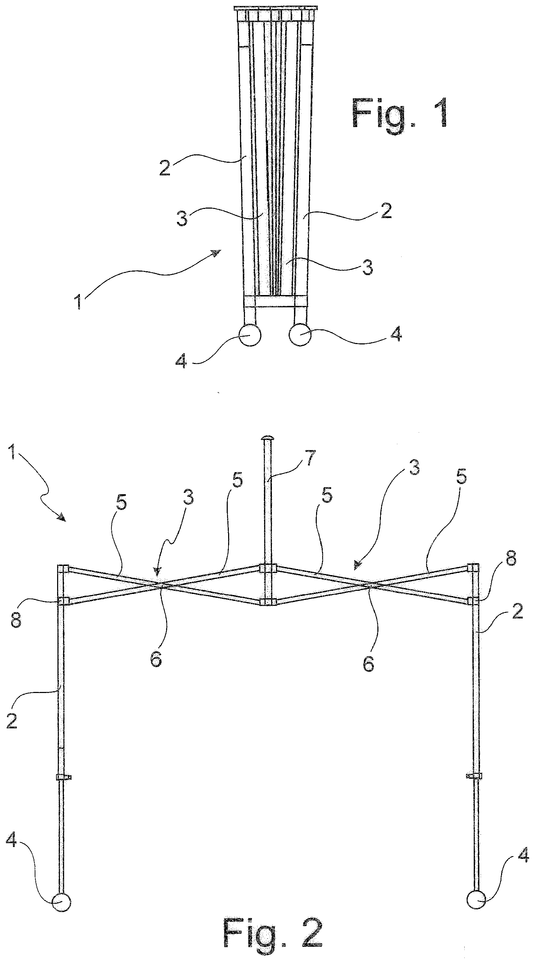

In Fig. 1 ist ein Gestell 1 für eine Laserschutzvorrichtung im zusammengeklappten Zustand dargestellt. Das Gestell 1 weist Eckpfosten 2 auf, die von Dachträgerteilen 3 verbunden sind. Die Dachträgerteile 3 sind scherengitterartig ausgebildet, so dass im zusammengeklappten Zustand eine kompakte Bauform gegeben ist. An den dem Boden zugewandten Enden der Eckpfosten 2 sind Rollen 4 angeordnet, die zum leichten Verschieben der Laserschutzvorrichtung dienen.

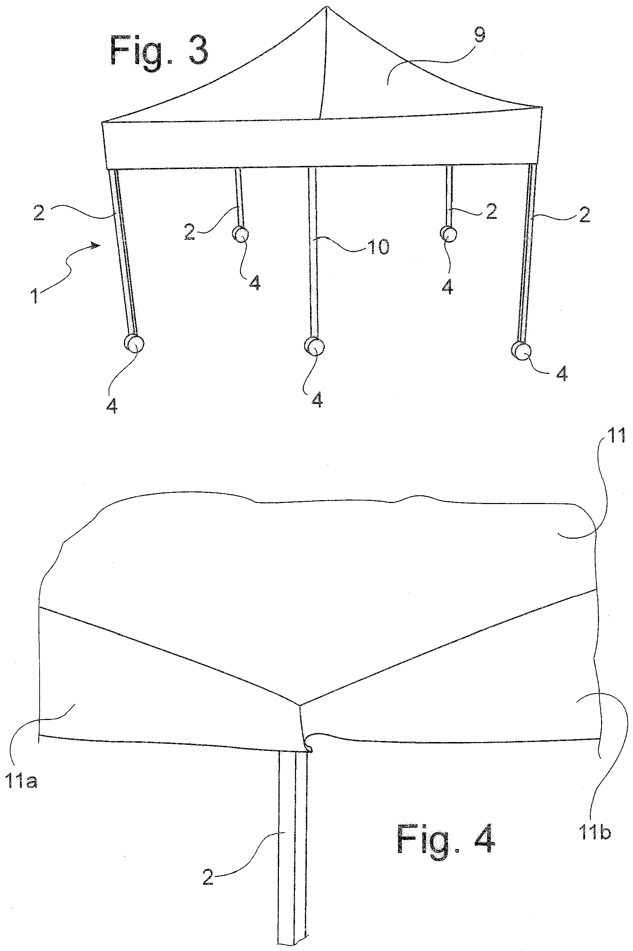

In Fig. 2 ist ein Gestell 1 gemäß Fig. 1 im aufgestellten Zustand dargestellt. Die Eckpfosten 2 sind ausziehbar ausgeführt, so dass die gewünschte Höhe eingestellt werden kann. Hierzu können die Eckpfosten 2 teleskopartig ausgebildet sein. Die Dachträgerteile 3 sind scherengitterartig ausgeführt. Hierbei sind einzelne Dachstreben 5 an Schnittpunkten 6 miteinander verbunden. Das Dach des Gestelles 1 weist weiterhin eine Mittelstange 7 auf, die beweglich mit den Dachstreben 5 verbunden ist. Weiterhin sind die Dachstreben 5 beweglich mit Gleitelementen 8, die gleitend auf den Eckpfosten 2 gelagert sind, verbunden. Die Gleitelemente 8 können an dem jeweiligen Eckpfosten 2, je nach Größe der abzuschirmenden Grundfläche, entlang gleiten und an der gewünschten Position entsprechend fixiert werden. In Fig. 3 ist ein Gestell 1 mit Eckpfosten 2, Seitenpfosten 10 und eingehängtem Überdach 9 dargestellt. Die Seitenpfosten 10 können an einer Seitenkante des Gestelles 1 vorzugsweise mittig zwischen zwei Eckpfosten 2 angeordnet sein. Die Seitenpfosten 10 können hierbei für zusätzliche Stabilität sorgen. Über die Dachträgerteile 3 und die Mittelstange 7 ist ein Überdach 10 gezogen, das beispielsweise zum Schutz vor Feuchtigkeit oder Staub dienen kann. Das Überdach 10 kann hierbei aus einem flächigen Textil ausgebildet sein. Das Überdach 10 wird an der Mittelstange 7 befestigt und über Verbindungsmittel, beispielsweise Klettstreifen, mit den Eckpfosten 2, den Seitenpfosten 9 und den Dachträgerteilen 3 verbunden.

In Fig. 4 ist eine Teilansicht eines Gestelles 1 mit eingehängtem Deckenelement 11 dargestellt. Das Deckenelement 11 wird an den Seitenpfosten 10 und vor allem an den Dachträgerteilen 3 befestigt. Hierzu können beispielsweise Klettverbindungen zum Einsatz kommen. Das Deckenelement 11 weist seitliche Abschnitte 11 a und 11b auf. Diese seitlichen Bereiche 11a und 11b können abschnittsweise über die von den Eckpfosten 2 und den Dachträgerteilen 3 bzw. die von den Eckpfosten 2, den Seitenpfosten 10 und den Dachträgerteilen 3 aufgespannte Fläche ragen. Somit ist ein Überlapp zu den Wandelementen 12 gegeben, so dass kein Laserlicht vom Inneren der Laserschutzvorrichtung nach außen dringen kann.

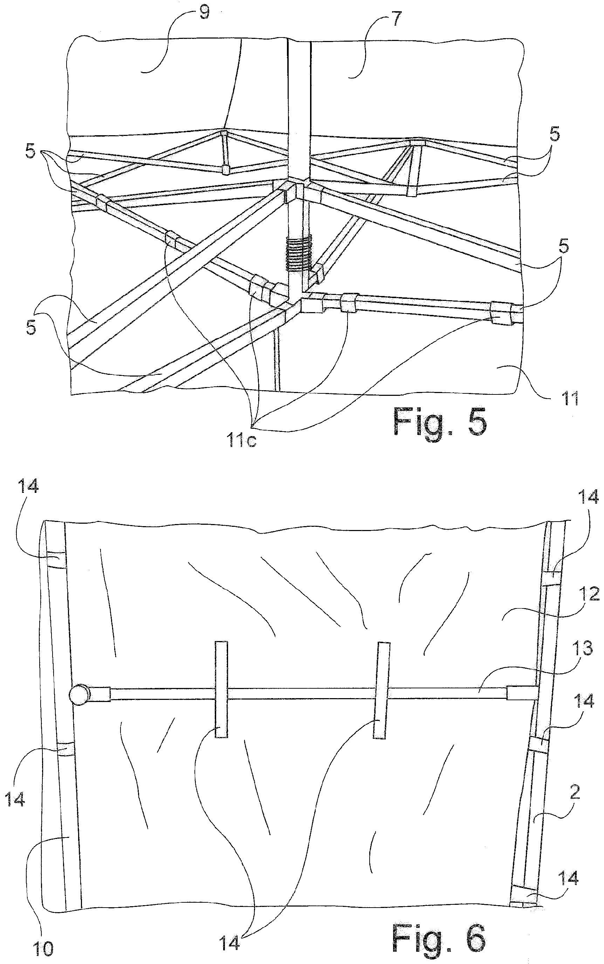

In Fig. 5 ist die Befestigung des Deckenelementes 11 an den Dachträgerteilen 3 dargestellt. Insbesondere kann das Deckenelement 11 an seiner dem abzuschirmenden raumabgewandten Seite mit Verbindungselementen 11c, insbesondere mit Klettschlaufen an den Dachstreben 5 der Dachträgerteile 3 befestigt werden.

In Fig. 6 ist ein Wandelement 12, das zwischen einem Seitenpfosten 10 und einem Eckpfosten 2 montiert ist, dargestellt. Die Eckpfosten 2 können mit den Seitenpfosten 10 über Verbindungsstreben 13 verbunden sein. An den Verbindungsstreben 13 sowie an den Eckpfosten 2 bzw. den Seitenpfosten 10 können die Wandelemente 12 über Verbindungselemente, insbesondere über Klettstreifen 14 befestigt werden.

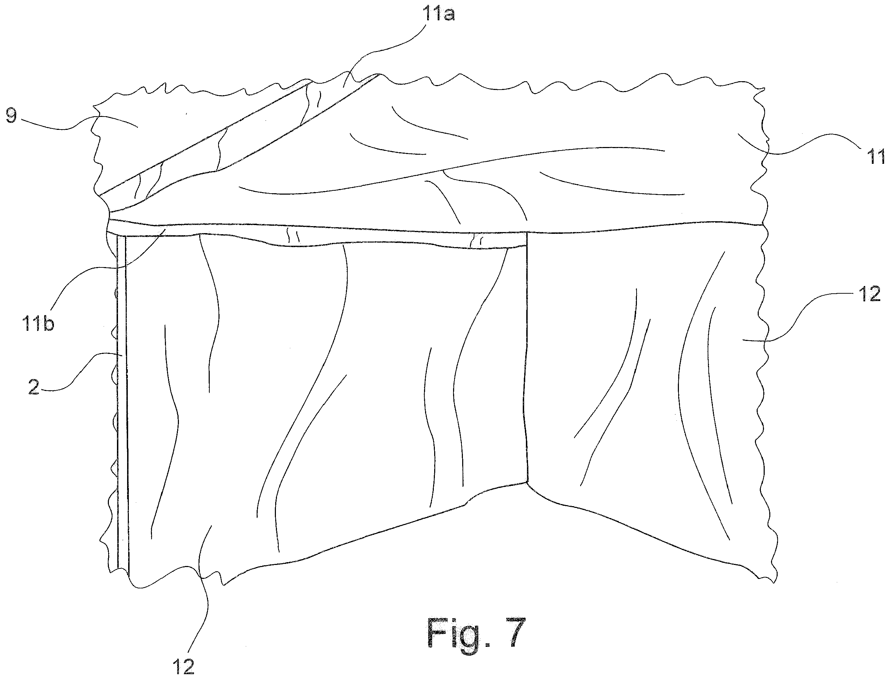

In Fig. 7 ist die Innenansicht einer erfindungsgemäßen Laserschutzvorrichtung mit Wandelementen 12 und einem Deckenelement 11 dargestellt. Die Wandelemente 12 sind überlappend so befestigt, dass kein Laserlicht vom Inneren der Laserschutzvorrichtung nach draußen dringen kann. Eckpfosten 2 sowie Seitenpfosten 10 sind hierbei komplett von den Deckenelementen 11 sowie Wandelementen 12 verdeckt, so dass es hier nichts zu Reflexionen des Laserlichtes kommen kann.

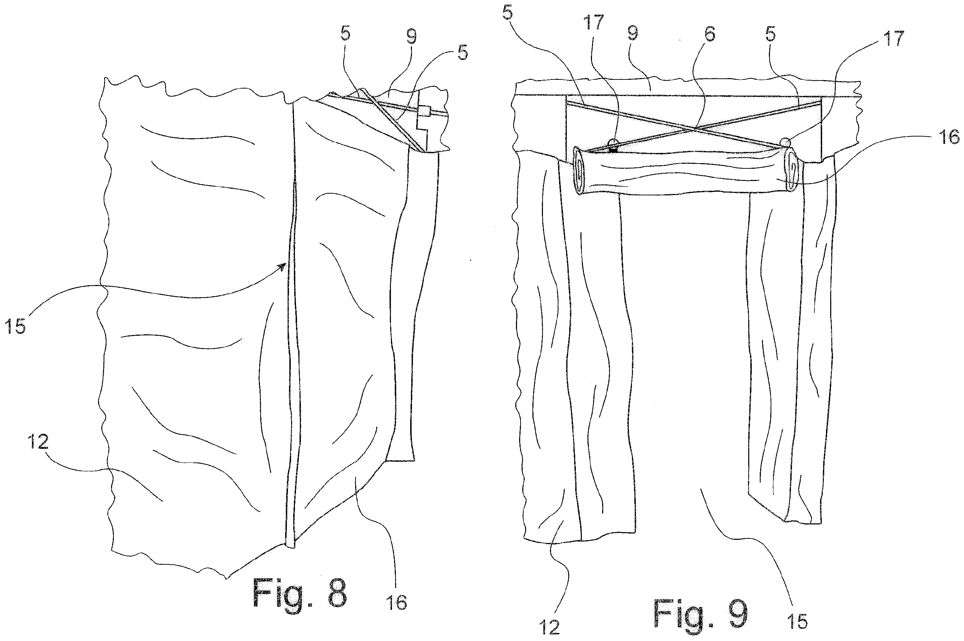

In Fig. 8 ist ein Türbereich 15 im geschlossenen Zustand dargestellt. Der Türbereich 15 ist durch eine Öffnung in einem Wandelement 12 gegeben, die mit einem Rollvorhang 16 verdeckt werden kann. Der Rollvorhang 16 besteht vorzugsweise aus dem gleichen Material wie das Deckenelement 11 und die Wandelemente 12. Der Rollvorhang 16 ist seitlich mit Klettverschlüssen versehen, so dass diese mit den ebenfalls mit Klettstreifen versehenen Rändern der Öffnung im Wandelement 12 verbunden werden kann.

In Fig. 9 ist ein Türbereich 15 mit einem aufgerollten Rollvorhang 16 dargestellt. Zum Öffnen des Türbereiches 15 wird der mit seiner oberen Kante am Dachträgerteil 3 befestigte Rollvorhang 16 von den Rändern der Öffnung im Wandelement 12 gelöst und nach oben hin aufgerollt. Im aufgerollten Zustand kann der Rollvorhang 16 beispielsweise durch Klettverbindungen 17 verschnürt werden.

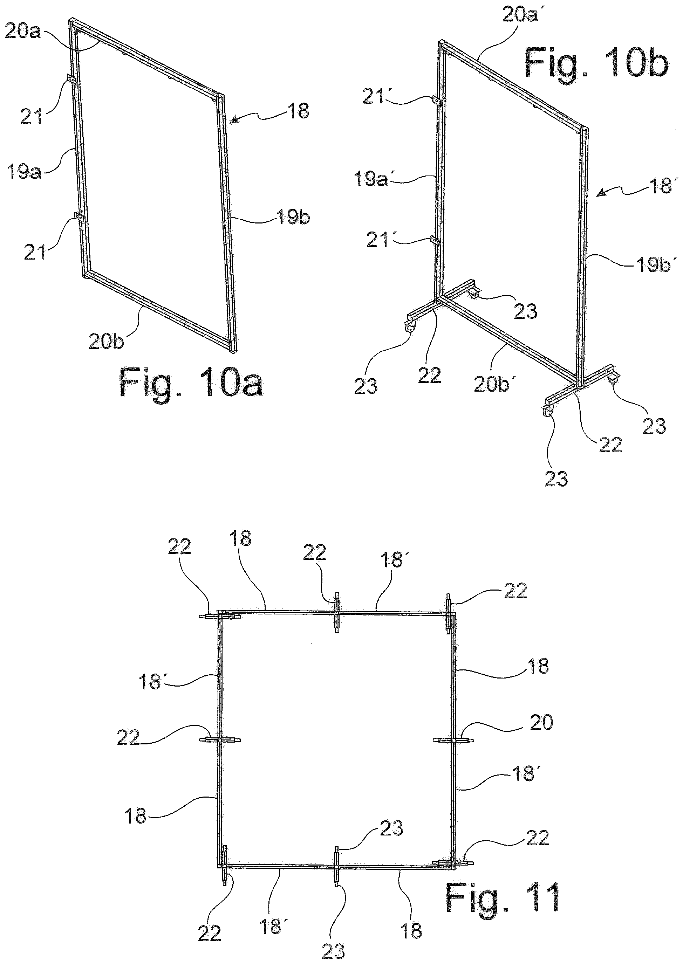

In Fig. 10a ist ein Rahmenelement 18 mit Seitenpfosten 19a, 19b und Querstreben 20a, 20b dargestellt. Die Seitenpfosten und die Querstreben können aus Aluminiumprofilabschnitten aufgebaut sein. An dem Seitenpfosten 19a sind Verbindungsstücke 21 angeordnet. Die Verbindungsstücke 21 sind zur Verbindung zweier Rahmenelemente miteinander, beispielsweise durch Verschraubung vorgesehen.

In Fig. 10b ist ein Rahmenelement 18' mit Seitenpfosten 19a', 19b' und Querstreben 20a', 20b' dargestellt. Das Rahmenelement 18' weist Ausleger 22 auf, die Rollen 23 aufweisen. Durch die Ausleger 22, die einen rechten Winkel mit der Querstrebe 20b' aufspannen, ist eine hohe Kippstabilität des Rahmenelementes 18' gegeben.

In Fig. 11 ist eine Laserschutzvorrichtung mit vier Seitenwänden, die aus Rahmenelementen 18, 18' aufgebaut sind. Die Rahmenelemente 18, 18' sind untereinander mit den Verbindungsstücken 21, 21' verbunden. Jede Seitenwand ist aus einem Rahmenelement 18 ohne Ausleger und einem Rahmenelement 18' mit Auslegern 22 aufgebaut. An den Verbindungspunkten der Seitenwände, also an den Eckpunkten der Laserschutzvorrichtung ist jeweils ein Rahmenelement 18 ohne Ausleger mit einem Rahmenelement 18' mit Auslegern 22 verbunden. Hierdurch kommt es nicht zu einer räumlichen Behinderung durch die Ausleger 22.

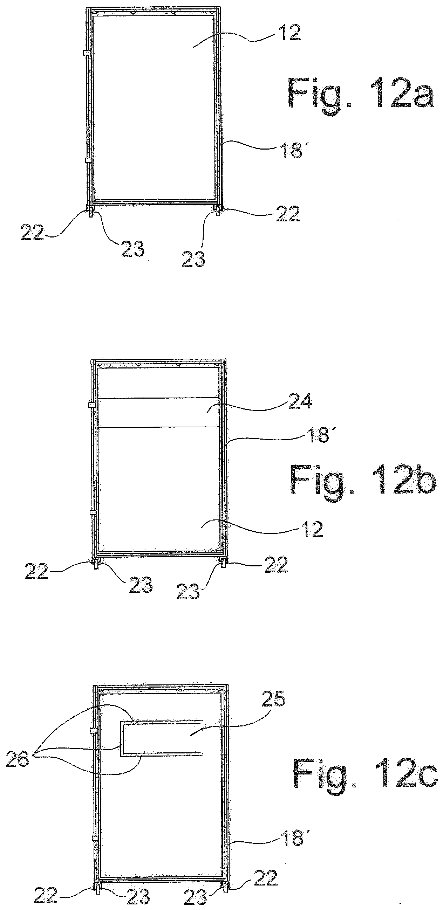

In Fig. 12a ist ein Rahmenelement 18' mit einem Wandelement 12 dargestellt. Das Wandelement 12 ist auf das Rahmenelement 18 aufgespannt.

In Fig. 12b ist ein Rahmenelement 18' mit einem Wandelement 12 bespannt, wobei das Wandelement 12 einen Fensterbereich 24 aufweist. Der Fensterbereich 24 kann in das Material eingearbeitet sein und kann beispielsweise aus Glas, Polycarbonat, Acryl oder Plexiglas bestehen.

In Fig. 12c ist ein Rahmenelement 18' mit einer Fensteröffnung 25 dargestellt. Die Fensteröffnung 25 ist an drei Seiten von Aufnahmetaschen 26 umgeben. In die Aufnahmetaschen 26 kann eine Fensterscheibe, beispielsweise aus Polycarbonat, Glas, Acryl oder Plexiglas aufgenommen sein. Durch die dreiseitige Anordnung der Aufnahmetaschen 26 ist ein leichtes Austauschen verschiedener Fensterscheiben ermöglicht, die einfach seitlich in die Aufnahmetaschen 26 eingeschoben werden können und somit je nach Anwendungszweck, beispielsweise je nach Wellenlänge und Brennweite des abzuschirmenden Lasers ausgetauscht werden können.

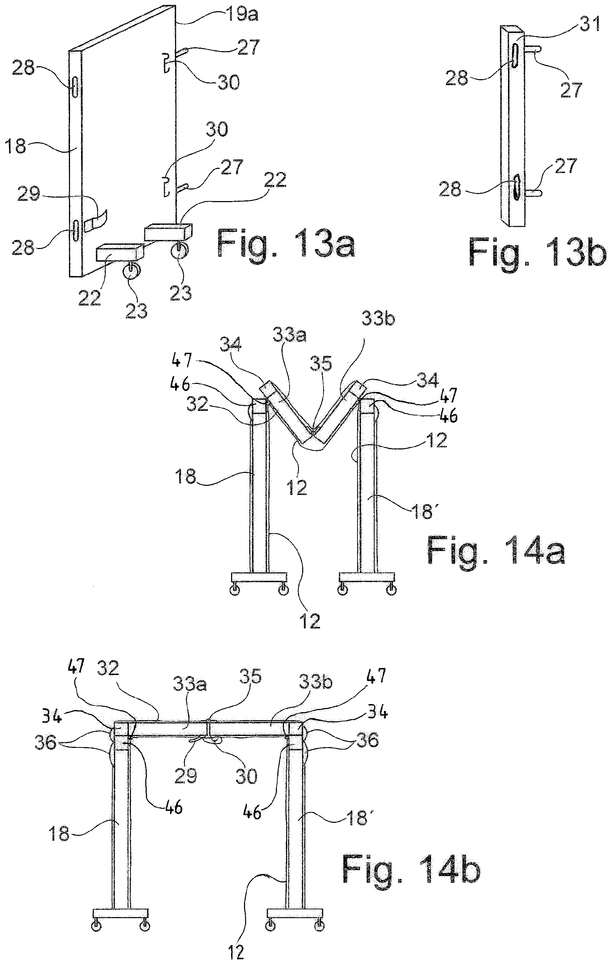

In Fig. 13a ist ein Rahmenelement 18 mit Verbindungslaschen 27 und korrespondierenden Aufnahmeöffnungen 28 dargestellt. Das Rahmenelement 18 weist Ausleger 22 auf, an denen Rollen 23 befestigt sind. Mehrere Rahmenelemente 18 können untereinander zu Seitenwänden verbunden werden. Hierzu werden zwei benachbarte Rahmenelemente 18, 18' mit den Seitenpfosten 19a, 19b in Kontakt gebracht, wobei die Verbindungslaschen 27 eines Rahmenelementes 18 in die Aufnahmeöffnungen 28 eines zweiten Rahmenelementes 18' eingefügt werden. Um ein Auseinanderrutschen der Rahmenelemente 18, 18' zu verhindern, werden die Rahmenelemente 18, 18' über Schnellspannverbindungen bestehend aus Spannhebeln 29 und Haken 30 verbunden.

In Fig. 13b ist ein Eckelement 31 zur Übereckverbindung von Rahmenelementen 18, 18' dargestellt. Ein Eckelement 31 weist Verbindungslaschen 27 und Aufnahmeöffnungen 28 auf. Die Verbindungslaschen 27 und Aufnahmeöffnungen 28 sind an zwei benachbarten Seitenflächen des Eckelementes 31 angeordnet und spannen zusammen einen rechten Winkel auf. Das Eckelement 31 kann beispielsweise durch einen Aluminiumprofilabschnitt ausgebildet sein. Zur Anordnung zweier Rahmenelemente 18, 18' werden die Verbindungslaschen 27 des Eckelementes 31 in die Aufnahmeöffnungen 28 eines ersten Rahmenelementes 18 eingefügt, während die Verbindungslaschen 27 des zweiten Rahmenelementes 18' in die Aufnahmeöffnungen 28 des Eckelementes 31 eingefügt werden. Somit ist eine Übereckverbindung zweier Rahmenelemente 18, 18' ermöglicht. Je nach Anordnung der Verbindungslaschen 27 zu den Aufnahmeöffnungen 28 sind beliebige Winkel zwischen den Rahmenelementen 18 und 18' ermöglicht.

In Fig. 14a ist eine Laserschutzvorrichtung mit seitlichen Rahmenelementen 18, 18' und einem Deckenelement 32 in einer Seitenansicht dargestellt. Das Deckenelement 32 ist durch ein Deckenrahmenelement ausgebildet, das Deckenpfosten 33 und Querstreben 34 aufweist. Die Deckenpfosten 33 bestehen aus Deckenpfostenabschnitten 33a, 33b, die über eine Gelenkverbindung 35, insbesondere eine Scharnierverbindung, miteinander verbunden sind. Durch die Gelenkverbindungen 35 der Deckenpfostenabschnitte 33a, 33b sind die Deckenelemente 32 zusammenlegbar. Insbesondere ist die Drehachse der Gelenkverbindung 35 an der dem zu umgebenden Raum abgewandten Seite der Deckenpfosten 33 angeordnet. Die Deckenelemente 32 weisen Verbindungsstreben 46 auf, die über Scharnierverbindungen 47 mit den Deckenseitenpfostenabschnitten 33a, 33b verbunden sind. Die Verbindungsstreben 46 sind parallel zu den Querstreben 34 des Deckenelementes 32 angeordnet. Die Drehachsen der Scharnierverbindungen 47 sind an den, der Laserlichtquelle zugewandten Seite der Verbindungsstreben 47 und der Deckenseitenpfostenabschnitte 33a, 33b angeordnet. Die Verbindungsstreben 46 können über Verbindungslaschen mit den oberen Querstreben 20a, 20a' der Rahmenelemente 18, 18' verbunden werden. Durch die Scharnierverbindungen 47 ist ein Herunterklappen der Scharnierverbindung 35 ermöglicht, wobei die Verbindung zwischen den seitlichen Rahmenelementen 18, 18' und dem Deckenelement 32 bestehen bleiben kann. Zur einfacheren Montage kann das Deckenelement 32 an der Gelenkverbindung 35 geklappt sein, so dass das Deckenelement 32 in der Seitenansicht eine V-förmige Form aufweist. Durch eine Vergrößerung des Abstandes zwischen allen Rahmenelementen 18, 18' wird das Deckenelement 32 in seine ausgeklappte Position gebracht. Durch das Auseinanderziehen der Rahmenelemente 18, 18' ist somit ein einfaches Aufstellen der Deckenelemente 32 gegeben.

In Fig. 14b ist eine Laserschutzvorrichtung mit Rahmenelementen 18, 18' und einem Deckenelement 32 in einer Seitenansicht im montierten Zustand dargestellt. Um ein Zusammenklappen des Deckenelementes 32 an der Gelenkverbindung 35 zu verhindern, weist das Deckenelement 32 Spannhebel 29 und Haken 30 an der, der Gelenkverbindung 35 abgewandten Seite des Deckenpfostens 33 auf. Hierdurch ist ein ungewolltes Zusammenklappen der Deckenpfosten 33 an der Gelenkverbindung 35 verhindert. Zur Absicherung des Deckenelementes 32 an den Rahmenelementen 18, 18' sind zudem Schnellspannverbindungen 36 angeordnet. Durch die Verbindung zweier Seitenwände ausbildender Rahmenelemente 18, 18' mit einem Deckenelement 32 sind verfahrbare Einheiten ausgebildet, die mit weiteren Einheiten je nach Anwendungsbedingungen verbunden werden können.

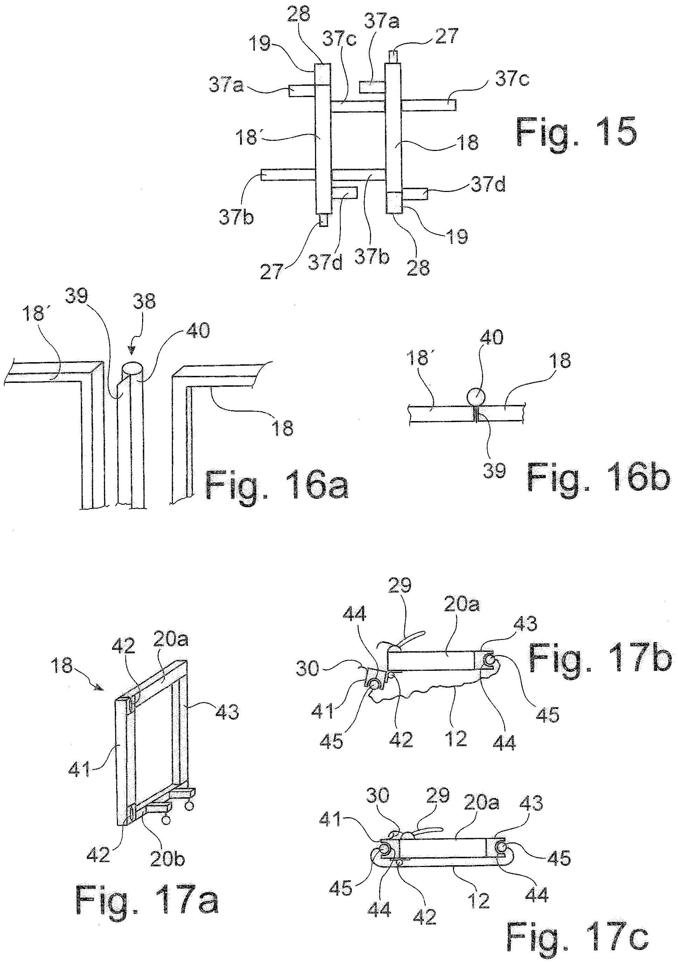

In Fig. 15 sind zwei aneinandergeschobene Rahmenelemente 18, 18' dargestellt. Die Rahmenelemente 18, 18' weisen Ausleger 37a bis 37d auf, wobei die an einer Seite angeordneten Ausleger 37a, b und 37c, d jeweils unterschiedliche Längen aufweisen. Zudem sind die Ausleger 37a bis 37d entlang der unteren Querstrebe 20b, 20b' in unterschiedlichen Positionen, also asymmetrisch angeordnet. Durch diese asymmetrische Anordnung lassen sich die Rahmenelemente 18, 18' näher aneinanderschieben, als es bei einer symmetrischen Anordnung der Ausleger 37a bis 37d um die untere Querstrebe 20b der Fall wäre.

In Fig. 16a ist ein kederartiges Abdeckelement 38 zur Abdeckung des Verbindungsspaltes zwischen zwei Rahmenelementen 18, 18' dargestellt. Das kederartige Abdeckelement 38 weist eine Kederfahne 39 auf, die zwischen den Seitenpfosten 19b und 19a' der Rahmenelemente angeordnet wird. Das kederartige Abdeckelement 38 weist einen Kederwulst 40 auf, der als Abdeckung dient. Zumindest die Außenseite des Kederwulstes 40 besteht hierbei aus einem nichtreflektierenden, laserlichtundurchlässigen Material, so dass ein Laserstrahl, der auf den Verbindungsbereich der Rahmenelemente 18, 18' trifft, nicht reflektiert werden kann.

In Fig. 16b sind zwei zu einer Seitenwand verbundene Rahmenelemente 18, 18' in einer Draufsicht dargestellt. Zwischen den Seitenpfosten 19b, 19a' ist das kederartige Abdeckelement 38 mit der Kederfahne 39 und dem Kederwulst 40 angeordnet. Durch den Kederwulst 40 wird der Verbindungsspalt zwischen den Rahmenelementen 18, 18' abgedeckt, so dass es an dieser Stelle zu keinen Reflektionen oder Streuungen des Laserstrahls kommen kann.

In Fig. 17a ist ein Rahmenelement 18 mit einem abklappbaren Seitenpfosten 41 dargestellt. Der Seitenpfosten 41 des Rahmenelementes 18 ist über Gelenkverbindungen 42 mit den Querstreben 20a, 20b des Rahmenelementes 18 verbunden. Durch die Gelenkverbindungen 42 ist der Seitenpfosten 41 aus der, von den Querstreben 20a, 20b und dem Seitenpfosten 43 aufgespannten Ebene herausklappbar. Der Seitenpfosten 41 und der Seitenpfosten 43 des Rahmenelementes 18 weisen Kederschienen 44 zur Aufnahme der an den Längsseiten eines Wandelementes 12 angeordneten Keder auf.

In Fig. 17b ist ein Rahmenelement 18 gemäß Fig. 17a mit einem abklappbaren Seitenpfosten 41 dargestellt. Die Seitenpfosten 41 und 43 weisen Kederschienen 44 auf. Im abgeklappten Zustand können die Kederschienen 44 der Seitenpfosten 41 und 43 die seitlich angeordneten Keder 45 eines Wandelementes 12 aufnehmen. Das Wandelement 12 befindet sich in der abgeklappten Stellung des Seitenpfostens 41 im nicht gespannten Zustand.

In Fig. 17c ist ein Rahmenelement 18 gemäß Fig. 17a und 17b im zugeklappten Zustand dargestellt. Das Wandelement 12 ist zwischen den Kederschienen 44 gespannt. Um ein Abklappen des Seitenpfostens 41 aus der vom Rahmenelement 18 aufgespannten Ebene zu verhindern, ist an der keine Gelenkverbindung 42 aufweisenden Seite des Rahmenelementes 18 ein Schnellspannverschluss mit einem Haken 30 und einem Spannhebel 29 zwischen dem Seitenpfosten 41 und der Querstrebe 20a angeordnet.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Laserschutzvorrichtung zur Abschirmung mindestens einer Laserlichtquelle mit flächig ausgebildeten, flexiblen Wandelementen (12), die mindestens drei Seitenwände ausbilden, wobei die Wandelemente (12) zumindest abschnittsweise aus laserlichtundurchlässigem Material bestehen, und mit mindestens einem mindestens ein Wandelement (12) haltenden Gestell (1),
**dadurch gekennzeichnet,**
**dass** die Wandelemente (12) einen abzuschirmenden Raum in vier seitliche Richtungen umgeben, und
**dass** das Gestell (1) verfahrbar ausgebildet ist.

2. Laserschutzvorrichtung nach Anspruch 1, **dadurch gekennzeichnet, dass** das Gestell (1) aus Rahmenelementen (18, 18') aufgebaut ist, dass mindestens ein Rahmenelement (18, 18') mindestens zwei Seitenpfosten (19a, 19a', 19b, 19b') und mindestens zwei Querstreben (20a, 20a') aufweist, und dass die Rahmenelemente (18, 18') jeweils mindestens ein flexibles Wandelement (12) halten.

3. Laserschutzvorrichtung nach Anspruch 2, **dadurch gekennzeichnet, dass** mindestens ein Seitenpfosten (19a, 19a', 19b, 19b') eines Rahmenelementes (18, 18') mindestens eine seitlich herausragende Verbindungslasche (27) aufweist, dass die Verbindungslasche (27) parallel zu einer von dem Rahmenelement (18, 18') aufgespannten Ebene angeordnet ist und dass mindestens ein Seitenpfosten (19a, 19a', 19b, 19b') eine zu einer Verbindungslasche (27) korrespondierende Aufnahmeöffnung (28) aufweist.

4. Laserschutzvorrichtung nach einem der Ansprüche 2 oder 3, **dadurch gekennzeichnet, dass** mindestens eine Seitenwand aus mindestens zwei Rahmenelementen (18, 18') ausgebildet ist, dass mindestens eine Verbindungslasche (27) eines ersten Rahmenelementes (18) in die Aufnahmeöffnung (28) eines zweiten benachbarten Rahmenelementes (18') aufgenommen ist und dass die nebeneinander angeordneten Rahmenelemente (18, 18') mit Schnellspannverschlüssen miteinander verbunden sind.

5. Laserschutzvorrichtung nach einem der Ansprüche 2 bis 4, **dadurch gekennzeichnet, dass** die Laserschutzvorrichtung mindestens ein Deckenelement (32) aufweist, dass das Deckenelement (32) aus mindestens einem Deckenrahmenelement mit Deckenseitenpfosten (33) ausgebildet ist und dass die Deckenseitenpfosten (33) des Deckenrahmenelementes aus mindestens zwei miteinander über mindestens eine Gelenkverbindung (35) verbundenen Deckenseitenpfostenabschnitten (33a, 33b) ausgebildet sind.

6. Laserschutzvorrichtung nach Anspruch 5, **dadurch gekennzeichnet, dass** die über eine Gelenkverbindung (35) verbundenen Deckenseitenpfostenabschnitte (33a, 33b) im ausgeklappten Zustand mit mindestens einem Schnellspannverschluss (29, 30) gesichert sind.

7. Laserschutzvorrichtung nach einem der Ansprüche 2 bis 6, **dadurch gekennzeichnet, dass** an mindestens einer Querstrebe (20b, 20b') mindestens eines Rahmenelementes (18, 18') mindestens vier Ausleger (37a - 37d) angeordnet sind, dass an jedem Ausleger (37a - 37d) mindestens eine Rolle angeordnet ist, dass die Ausleger (37a - 37d) senkrecht zu einer von dem Rahmenelement (18, 18') aufgespannten Ebene angeordnet sind und dass jeweils mindestens zwei Ausleger (37a - 37d) sich zu jeder Seite der aufgespannten Ebene erstrecken und dass alle Ausleger (37a - 37d) entlang einer Querstrebe (20b, 20b') in unterschiedlichen Abständen zu einem Seitenpfosten (19a, 19a') angeordnet sind.

8. Laserschutzvorrichtung nach einem der Ansprüche 2 bis 7, **dadurch gekennzeichnet, dass** zwischen den Seitenpfosten (19a, 19a', 19b, 19b') zweier benachbarter Rahmenelemente (18, 18') eine Kederfahne (39) mit einem kederartigen Abdeckelement (38) angeordnet ist, dass das kederartige Abdeckelement (38) zumindest abschnittsweise aus einem laserlichtundurchlässigen Material besteht und dass das kederartige Abdeckelement (38) den Verbindungsspalt zwischen zwei Rahmenelementen (18, 18') abdeckt.

9. Laserschutzvorrichtung nach einem der Ansprüche 2 bis 8, **dadurch gekennzeichnet, dass** die flexiblen Wandelemente (12) an ihren Längsseiten jeweils mindestens einen Keder (45) aufweisen und dass die Seitenpfosten (43) jeweils mindestens eine Kederführungsschiene (44) aufweisen.

10. Laserschutzvorrichtung nach Anspruch 9, **dadurch gekennzeichnet, dass** mindestens ein eine Kederführungsschiene (44) aufweisender Seitenpfosten (43) über Gelenkverbindungen (42) mit den Querstreben (20a, 20a', 20b, 20b') des Rahmenelementes (18, 18') klappbar verbunden ist.

11. Laserschutzvorrichtung nach einem der Ansprüche 2 bis 11, **dadurch gekennzeichnet, dass** mindestens ein, von mindestens einem Rahmenelement (18, 18') gehaltenes Wandelement (12) eine, die Ausleger (22) aufweisende Querstrebe (20a, 20a', 20b, 20b') überragende, Schürze aufweist.

12. Laserschutzvorrichtung nach Anspruch 2, **dadurch gekennzeichnet, dass** mindestens eine Seitenwand aus mindestens zwei miteinander verbundenen Rahmenelementen (18, 18') aufgebaut ist, dass mindestens ein Rahmenelement (18) an mindestens einer Querstrebe (20b, 20b') angeordnet Rollen aufweist, dass mindestens ein Seitenpfosten (19a, 19a') mindestens eines Rahmenelementes (18, 18') Verbindungsstücke (21, 21') zur Verbindung mit mindestens einem Seitenpfosten (19a, 19a') eines weiteren Rahmenelementes (18, 18') aufweist.

13. Laserschutzvorrichtung nach einem der Ansprüche 2 oder 12, **dadurch gekennzeichnet, dass** an mindestens einer Querstrebe (20b') mindestens eines Rahmenelementes (18') Ausleger (22) angeordnet sind und dass an jedem Ausleger (22) mindestens zwei Rollen (23) angeordnet sind.

14. Laserschutzvorrichtung nach einem der Ansprüche 2 oder 12 bis 13, **dadurch gekennzeichnet, dass** eine Seitenwand aus mindestens einem Ausleger (22) aufweisenden Rahmenelement (18') und mindestens einem keine Ausleger (22) aufweisenden Rahmenelement (18) ausgebildet ist.

15. Laserschutzvorrichtung nach einem der Ansprüche 1 bis 14, **dadurch gekennzeichnet, dass** mindestens ein Wandelement (12) zumindest abschnittsweise aus einem laserlichtundurchlässigen und für Teile des sichtbaren Lichts durchlässigen Material besteht.
